# EUROPEAN PATENT APPLICATION

(11) **EP 1 189 021 A1**
(43) Date of publication of application: **20.03.2002**
(21) Application number: 01203418.7
(22) Date of filing: 11.09.2001
(51) Int. Cl.: G01C 11/00, G01C 11/04, G01C 11/02, H04N 7/22

(54) **Improvements in or relating to camera systems**

(30) Priority: 13.09.2000 GB 0022419
(71) Applicant: ROKE MANOR RESEARCH LIMITED, Romsey, Hampshire SO51 0ZN (GB)
(72) Inventor: Spriggs, Timothy John, Hayling Island PO11 0NJ (GB)
(74) Representative: Allen, Derek

(57) **Abstract**

A camera system (1-8), comprising a digital camera (1), a GPS (Global Positioning System) receiver or the like (5) which serves accurately to identify the position of the digital camera in at least two horizontal co-ordinate dimensions, and a data store (8) for a digital camera image produced, wherein the digital image stored is annotated or labelled with data identifying camera position at the time of image capture.

## Description

This invention relates to camera systems and more especially but not exclusively it relates to camera systems for use in aerial cartography.

Maps, perhaps supplemented by local knowledge, are often required by emergency services to reach the scene of an incident which they are called upon to attend. However, in remote areas, and in cases where co-ordinated international aid effort is difficult to deploy, rescuers may not have accurate maps or local knowledge available to them. Moreover, in the case of a severe natural disaster, such as a tornado or a tsunami, for example, it is quite likely that roads and landmarks will have been destroyed or severely damaged, whereby neither maps nor local knowledge are likely still to be valid. Similar problems may arise in the case of some serious accidents, such as an aircraft crash on a town for example, when it may not be known which roads to the scene of the accident are blocked, nor which buildings have been destroyed, and in some situations, it may not even be clear exactly where the wreckage or damage actually is.

It is an important object of the present invention to provide a system which can be used rapidly to produce an accurate map or the like for use by emergency services to locate, or reach, the scene of an accident or other incident which requires their assistance.

According to the present invention as broadly conceived, A camera system comprises a digital camera, a GPS (Global Positioning System) receiver or the like which serves accurately to identify the position of the digital camera in at least two horizontal dimensions, and a data store for a digital camera image produced, wherein the digital image stored is annotated or labelled with data identifying camera position at the time of image capture.

According to one embodiment of the present invention for airborne use, a camera system comprises a digital camera, a GPS (Global Positioning System) receiver or the like which serves accurately to identify the position of the digital camera in at least two horizontal co-ordinate dimensions, camera altitude determination means, and a data store for a digital camera image produced, wherein the digital image stored is annotated or labelled with; GPS data identifying camera position at the time of image capture, and; data appertaining to camera altitude above ground at the time of image capture by the digital camera.

It will be appreciated that a camera system for use in this embodiment of the invention may be used, in the case of a disaster, to photograph the disaster area from the air, so as to produce an accurate digital image (the precise position of which is indicated by the accompanying data labelling) which image may be scaled as necessary, correlated to and overlaid on an existing map or chart thereby to provide a visual update so as to include any new features produced by the disaster.

Greater precision may be obtained by also embodying a camera attitude determinator which serves to provide data appertaining to camera view angle, in elevation and azimuth, and storing data appertaining to camera attitude in elevation and azimuth at the time of image capture.

The GPS may serve to identify the position of the digital camera in three dimensions so as to provide the data appertaining to camera altitude above ground at the time of image capture by the digital camera, whereby data from an altimeter, which may alternatively be available, is not required.

The data store may comprise a multi-image store with capacity for a plurality of images each appropriately labelled which may be down-loaded as required for subsequent processing.

The multi-image store may comprise a storage device for the said plurality of images which is adapted for removal from the camera system thereby to facilitate image storage and or processing elsewhere in cases where down-loading as aforesaid, perhaps by radio transmission to a remote processor, is not possible or not required.

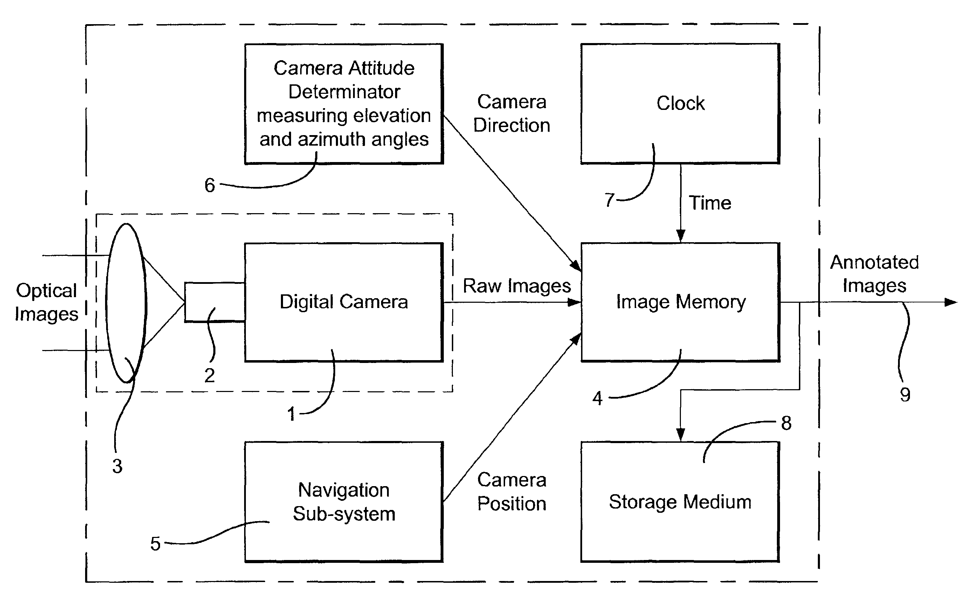

One embodiment of the invention will now be described by way of example only with reference to the accompanying drawing which is a block schematic diagram of a camera system.

Referring now to the drawing, a camera system for airborne use comprises a digital camera 1, which includes a digital image sensor 2, and optics 3. Cameras of this kind are now very well known and further detailed description is therefore believed to be unnecessary. Image data is transferred from the camera 1, to an image store 4, wherein it is labelled with 'position' data from a GPS receiver 5, which serves to provide data identifying the ground location of each image in three dimensions so that for each image, altitude as well map reference co-ordinates are provided.

In order to provide compensation as necessary with elevation and azimuth viewing angle variation, a camera attitude determinator 6, is provided, which serves to measure camera viewing angle in azimuth and elevation and label each image stored in the store 4, with this data also. Sensors for providing this information are commercially available and will accordingly not be described herein in detail. A simple sensor may however comprise a compass from which the azimuth angle is derived and a damped plumb line for sensing elevation angle. Measurements from these may be captured by an image sensor, which may be the image sensor 2, via suitable optics. Elevation may alternatively be sensed quite simply by means of a transparent tube containing an unconstrained mass, for example a ball bearing, and formed to a sector of a circle and fixed to the camera body, provided the aircraft does not accelerate too much.

Additionally, the system may include a clock 7, which records in respect of each image, the date and time it was produced. Images thus annotated or labelled are stored locally in a storage medium 8, comprising a removable disc, and/or fed via a line 9, for radio data transmission to a remotely located CPU for processing.

The system as just before described may find various uses and consider for example the case of a natural disaster, such as a tornado, in a country with emergency service control centres which can communicate electronically with their mobile units. In these circumstances an aircraft can be scrambled to record the path of the tornado photographically. The control centre can receive the images electronically from the system, and overlay them onto their existing maps, so that it can be seen which routes are still available. Mobile response units can then be directed along the best routes by means of radio-pictures with map details overlaid which can also be printed out, or transmitted to in-cab displays, for use by crews.

To facilitate map registration, the digital camera 1, tags or labels each image with the position of the digital camera at the time the image was produced. The best images will be obtained if the camera is hard-mounted onto the aircraft such that it is pointing downwards.

However, in an emergency, an aircraft with the appropriate equipment is unlikely to be available and so the camera system is an integrated unit which is arranged automatically to compensate for elevation variation as well as taking account of azimuth angle so that it can be hand-held if necessary. It will be readily appreciated that oblique images can be electronically corrected to provide a true plan view, but that in order to make this correction each image produced by the camera must be appropriately labelled so that the viewing direction and angle is recorded. A changing situation, such as a forest fire, may thus be tracked by making repeated passes and time-stamping the images by means of the clock provided.

By using a system as described, international aid efforts can better be deployed and co-ordinated and maps and images can be simply and rapidly fabricated to facilitate disaster response management.

Although systems as herein described are eminently suitable for cartographic use by emergency services, they may also find application in land use survey and/or aerial reconnaissance applications, or with an image correlation database to direct an unmanned air vehicle to its intended destination by the 'best' route, or to document scenes, such as for example that of a crime for later investigation.

## Claims

1. A camera system comprising a digital camera, a GPS (Global Positioning System) receiver or the like which serves accurately to identify the position of the digital camera in at least two horizontal dimensions, and a data store for a digital camera image produced, wherein the digital image stored is annotated or labelled with data identifying camera position at the time of image capture.

2. A camera system as claimed in Claim 1, suitable for airborne use, comprising a digital camera, a GPS receiver or the like which serves accurately to identify the position of the digital camera in at least two horizontal co-ordinate dimensions, camera altitude determination means, and a data store for a digital camera image produced, wherein the digital image stored is annotated or labelled with; GPS data identifying camera position at the time of image capture, and; data appertaining to camera altitude above ground at the time of image capture by the digital camera.

3. A camera system as claimed in Claim 2, suitable for airborne use, comprising a digital camera, a GPS receiver or the like which serves accurately to identify the position of the digital camera in at least two horizontal co-ordinate dimensions, a camera attitude determinator which serves to provide data appertaining to camera view angle, in elevation and azimuth, camera altitude determination means, and a data store for a digital camera image produced, wherein the digital image stored is annotated or labelled with; data identifying camera position at the time of image capture; data appertaining to camera attitude in elevation and azimuth at the time of image capture, and; data appertaining to camera altitude above ground at the time of image capture by the digital camera.

4. A system as claimed in Claim 2, or Claim 3, wherein the GPS receiver serves to identify the position of the digital camera in three dimensions so as to provide the data appertaining to camera altitude above ground at the time of image capture by the digital camera.

5. A system as claimed in any preceding claim, wherein the data store comprises a multi-image store with capacity for a plurality of images, each appropriately labelled, which are arranged to be down-loaded as required for subsequent processing.

6. A system as claimed in Claim 5, wherein the multi-image store comprises a storage device for the said plurality of images which is adapted for removal from the camera system.

7. A system as claimed in any preceding claim comprising a clock which serves to provide time data for time labelling images produced by the digital camera.

8. A system as claimed in Claiml, Claim 2, or Claim 3, and substantially as hereinbefore described with reference to the accompanying drawings.

9. A cartographic map up-dating system comprising a camera system as claimed in any preceding claim for producing a current digital image, which is scaled as necessary and overlaid on a pre-existing similar map or chart, thereby to up-date it.
